# EUROPEAN PATENT APPLICATION

(11) **EP 4 410 604 A1**
(43) Date of publication of application: **07.08.2024**
(21) Application number: 24154430.3
(22) Date of filing: 29.01.2024
(51) Int. Cl.: B60R 16/02

(54) **CABLE GUIDE FOR MATERIALS-HANDLING VEHICLES**

(30) Priority: 01.02.2023 US 202318104629
(71) Applicant: Hyster-Yale Group, Inc., Fairview, OR 97024 (US)
(72) Inventor: DE LINT, Menno, Fairview, OR, 97024 (US); ROY, Neha, Fairview, OR, 97024 (US)
(74) Representative: Bardehle Pagenberg Partnerschaft mbB Patentanwälte Rechtsanwälte

(57) **Abstract**

A cable guide (150, 150A, 150B, 150C) for a materials-handling vehicle (50, 60, 100) comprises a plate-like structure (152) with a plurality of connection points (160, 162) arranged thereon. The connection points (160, 162) can, for instance, be holes formed through the cable guide (150, 150A, 150B, 150C). A materials-handling vehicle (50, 60, 100) comprises a plurality of connectors (130) for connecting to the cable guide (150, 150A, 150B, 150C). The connectors (130) can be standardized connectors. The cable guide (150, 150A, 150B, 150C) can optionally include multiple plates (152) that can be connected together through an adapter plate (154). The adapter plate (154) can be connected to the connectors (130) of the materials-handling vehicle (50, 60, 100). Multiple cables or lines (210, 212, 220, 230, 240) can be arranged in a desired routing configuration along the cable guide (150, 150A, 150B, 150C) using mechanical fasteners (250, 250C) connected to selected ones of the connection points (160, 162) to connect the cables or lines (210, 212, 220, 230, 240) to the cable guide (150, 150A, 150B, 150C) in a desired routing configuration. The cable guide (150, 150A, 150B, 150C) can be formed of a material that provides a grounded connection to the frame (115) and that provides EMC filtering characteristics.

## Description

### PRIORITY CLAIM

This application claims priority from U.S. Patent Application No. 18/104,629, filed February 1, 2023, the contents of which are incorporated herein by reference, in their entirety.

### TECHNICAL FIELD

This disclosure relates generally to methods and mechanisms for routing and organizing electric cables, hydraulic lines, fuel lines, cooling lines, and other wires or lines within materials-handling vehicles, such as lift trucks or reach trucks (stackers).

### BACKGROUND INFORMATION

Conventional materials-handling vehicles have brackets designed into the frame weldments to guide wire harnesses and hydraulic lines for the vehicles. However, with the advent of electric and hydrogen powered vehicles, there is a proliferation of wiring that needs to be routed throughout the vehicle. The number of interfaces with the truck frame needed to hold the wiring and other lines in place has also increased. While conventional systems are designed to make efficient use of space for a specific design, they lack flexibility for alternative designs as well as easy upgradeability for future upgrades or improvements.

### OVERVIEW OF DISCLOSURE

A conventional materials-handling vehicle's frame can, for instance, accommodate a hydrogen fuel cell, hydrogen cylinders, an electric drive train, EMC (electromagnetic compatibility) filter boxes, DC/DC inverters, cooling systems, rechargeable batteries (*e*.*g*., lithium-ion ("Li-ion") batteries), a hydraulic system, and other systems necessary to power and operate the vehicle. The electric drive train of the vehicle can be arranged in a space between longitudinal side frames of a main frame. Various cables and lines including high voltage (HV) wiring harnesses, 24-volt low voltage (LV) wiring harnesses, cooling lines, hydraulic hoses, H₂ piping, etc., must all be routed through the vehicle to connect these components together for proper operation.

According to principles of the present inventive concepts, a cable guide can be mounted to standardized interfaces formed or arranged along the vehicle frame to provide an easy mechanism for organizing and routing cables and lines (electrical wiring, hoses, tubes, etc.) within the vehicle between the vehicle's operating components. The cable guide can be a single contiguous structure or it can be formed of multiple modular plates connected together through one or more adapter plates.

More specifically, cable guide supports or brackets can be formed along or attached to (*e.g.,* welded to) an inside of each of the vehicle's longitudinal side frames to provide a standardized interface to support a cable guide along an inner portion of each of the side frames. The cable guide preferably includes an elongated plate-like structure with a plurality of holes arranged through it that support numerous different fastening options. The holes can, for instance, be configured to receive many different types of cable or line connectors such as cable or line clamps, Velcro connectors, wire ties, zip ties, plastic clips, or other mechanical fasteners. The plurality of holes can be arranged in a predetermined pattern based on a specific implementation or have multiple patterns to provide a wide variety of cable/line routing options. Additional holes can also be provided for rivets with internal threads to accommodate still other types of fasteners to support other fastening needs.

Alternatively, rather than holes, other connection mechanisms can be arranged along the cable guide at desired connection points to support different arrangements of cable/line routing. For instance, cable clamps or other mechanical cable/line connectors can be fastened to desired locations along the cable guide using adhesive, screws, clips, Velcro^{®}, or any other mechanical or chemical connection sufficient to hold the clamps in their desired location on the cable guide. Or a hook and loop fastener (*e*.*g*., Velcro^{®}) sheet could be arranged along the internal surface of the cable guide to support a hook and loop fastener connection at any point along the sheet.

For convenience and safety, different cables and lines can be arranged along the different sides of the vehicle frame. For instance, high voltage cables can be arranged along the cable guide on the left hand side of the vehicle frame while the low voltage cables and hydraulic lines can be arranged along the cable guide on the right hand side of the vehicle frame. Furthermore, the desired cables and lines can be arranged along and connected to the cable guide before the cable guide is installed in the materials-handling vehicle.

In particular, there are multiple rules, guidelines, and best practices for arranging high voltage cables in materials-handling vehicles. Additional and different rules apply for low voltage cables and EMC components. For DC circuits, for instance, HV positive and negative cables should run as close together as possible. HV AC cables should run close together and parallel, but must also be prevented from moving. By providing a cable guide where the wires can be laid out, arranged, and connected to the guide before being installed in the vehicle, arrangement rules, guidelines, and best practices for various types of cables and lines can be checked and verified outside of a vehicle where access to such lines and cables may be easier compared to when such lines and cables are installed into a vehicle. Alternatively, however, the cables and lines can be mounted to the cable guides after the cable guides are attached to the vehicle frame.

The wiring clamps can be designed to further satisfy the requirements for high voltage cables and to provide effective and easy connection to the cable guides. For instance, the clamps can be configured to hold multiple lines at a desired distance apart from each other. The clamps can further be designed to connect either to the cable guide, to another clamp, or both.

In one embodiment, a wiring clamp has a two-piece body with two matching cable receiving grooves in each half. The cable receiving grooves can be spaced a desired distance apart from each other to maintain the desired distance between the cables. To improve manufacturing efficiency, the two halves can be identical to each other. A through hole is arranged through a center of each of the halves to receive a screw or other connector. After the cables are arranged in the cable receiving grooves on one half of the body, the other half is placed over the cables and a screw (or other connector) is inserted through the center hole to hold the two halves together and to secure the clamp to the cable guide, to another clamp, or both, as desired. Of course, other clamp designs are contemplated. For example, a similar clamp can be designed for securing a single cable or for securing more than two cables to the cable guide.

The cable guide design can support different wheel bases by offering multiple routing options. The cable guide can be formed of multiple modular plates with the number of plates selected based on the truck type (*e.g.,* truck length). The cable guide plates can be connected directly to the supports on the vehicle frame or adapter plates can be provided to connect the guide plates to the vehicle frame and to connect multiple cable guide plates together. Modular plates provide simplicity in manufacturing and cost advantages in terms of reduced parts counts and reduced parts costs due to increased volumes. However, the cable guide can alternatively be configured of a single plate having a length selected based on the truck length. Multiple cable guide plate lengths can be provided for different truck lengths.

In one embodiment, the cable guide is made of a readily available material such as precoated steel with a zinc layer. This material is suitable for laser cutting and also does not require any additional corrosion protection. It can also provide an electrical connection for equipotential ground straps and is suitable for EMC filtering because it allows dissipation of electrical noise through the frame as opposed to through the wiring. The cable guide can be provided with a grounded connection to the frame (*e*.*g*., by stripping the paint off the connectors or connecting to unpainted connectors) or the cable guide can be designed to provide sufficient grounding. Of course, other materials (including metals and/or plastics) that are easy to form into a plate-like structure having a pattern of holes, and that also preferably provide some degree of corrosion resistance either with or without additional treatment, could be used. If plastics or non-conducting metals are used, additional electrical connectors or dissipators for ground straps and EMC filtering may be required.

The cable guide provides easy configurability for different application demands. Because it provides countless different routing options, it can be used for any truck configuration regardless of the combinations of fuel cells, hydrogen storage containers, cooling systems, batteries, etc. Using a reconfigurable cable guide also provides flexibility for future updates and field upgrades by making it simple to upgrade/downgrade to higher/different configurations within a manufacturing facility or by dealers. It adds no appreciable costs to the design, eases assembly and improves the chances of "first time right" in manufacturing.

This design provides commonality between different frames reducing the need for different frame weldments and improves the quality control on the assembly line. Moreover, use of a standardized interface permits a single truck frame to be used for multiple configurations of internal components without the need for specialized routing components to be designed into the truck frame itself. This supports both a shorter time to market and a shorter release to production time, and also facilitates cost reductions due to larger parts volumes.

Although particularly useful for high voltage trucks such as reach trucks and container trucks, these principles can be used with respect to any materials-handling vehicle and other industrial vehicles. Additional aspects and advantages will be apparent from the following detailed description of example embodiments, which proceeds with reference to the accompanying drawings.

### BRIEF DESCRIPTION OF THE DRAWINGS

The foregoing and additional objects, features, and advantages of the present inventive concepts will become more readily apparent from the following detailed description of preferred embodiments, depicted in the attached drawings, in which:
Figure 1 is an isometric illustration of a frame for a conventional internal combustion engine reach truck.
Figure 2 is an isometric view of components for a conventional diesel truck arranged to fit within the frame of Figure 1.
Figure 3 is an isometric illustration of components for a fuel cell truck configured to fit with the frame of Figure 1, illustrating the complexity of wiring as compared to the diesel truck of Figure 2 and further illustrating a method for improved cable routing according to principles of the present inventive concepts.
Figure 4 is an isometric illustration of the frame of Figure 1, further showing a cable guide constructed and attached to the frame according to principles of the present inventive concepts.
Figure 5 is an isometric illustration of the vehicle frame of Figure 4, further illustrating a routing of cables along the cable guide attached to the vehicle frame.
Figure 6 is a close-up isometric illustration of the cable guide along with high voltage (HV) wiring arranged along the cable guide and high voltage components arranged within the vehicle frame of Figure 1.
Figure 7 is an isometric view of a left side of the vehicle frame of Figure 1, further having a cable guide arranged thereon for routing low voltage (LV) and hydraulic cables according to still further principles of the present inventive concepts.
Figure 8 is a close-up view of the vehicle frame of Figure 1 further having connectors adapted to connect to a cable guide according to still further principles of the present inventive concepts.
Figure 9 is an isometric illustration of a cable guide plate for the cable guide according to principles of the present inventive concepts.
Figures 10 and 11 are close-up views of connections between cables, clamps, and a cable guide plate and also between an adapter plate, multiple cable guide plates, and the frame connectors according to still further principles of the present inventive concepts.
Figure 12 is an isometric view of electronic components, wiring, and cable guides removed from the vehicle frame of Figure 1, further illustrating the components and connections of a cable guide system according to principles of the present inventive concepts.
Figure 13 is a top view illustrating internal components of a fuel cell vehicle having cables, tubes, and other lines routed using a cable guide system according to still further principles of the present inventive concepts.
Figure 14A is an isometric view of the electronic components similar to Figure 12, further illustrating a cable tray for supporting hydraulic tubes (lines), cables, and clamps.
Figure 14B is an isometric view of the cable tray of Figure 14 illustrating connections between the cables and tubes to the cable tray.
Figure 15A is a cutaway side view of the cable guide of Figure 12 illustrating a connection between the cable guide and HV cables.
Figure 15B is a cutaway side view of the cable tray of Figure 14 illustrating connections between the cable tray and hydraulic lines.

### DETAILED DESCRIPTION OF EMBODIMENTS

Example embodiments are described below with reference to the accompanying drawings. Unless otherwise expressly stated in the drawings, the sizes, positions, etc., of components, features, elements, etc., as well as any distances therebetween, are not necessarily to scale, and may be disproportionate and/or exaggerated for clarity.

The terminology used herein is for the purpose of describing particular example embodiments only and is not intended to be limiting. As used herein, the singular forms "a," "an" and "the" are intended to include the plural forms as well, unless the context clearly indicates otherwise. It should be recognized that the terms "comprise," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise specified, a range of values, when recited, includes both the upper and lower limits of the range, as well as any sub-ranges therebetween. Unless indicated otherwise, terms such as "first," "second," etc., are only used to distinguish one element from another. For example, one element could be termed a "first element" and similarly, another element could be termed a "second element," or vice versa. The section headings used herein are for organizational purposes only and are not to be construed as limiting the subject matter described.

Unless indicated otherwise, the terms "about," "thereabout," "substantially," etc. mean that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art.

Spatially relative terms, such as "right," left," "below," "beneath," "lower," "above," and "upper," and the like, may be used herein for ease of description to describe one element's or feature's relationship to another element or feature, as illustrated in the drawings. It should be recognized that the spatially relative terms are intended to encompass different orientations in addition to the orientation depicted in the figures. For example, if an object in the figures is turned over, elements described as "below" or "beneath" other elements or features would then be oriented "above" the other elements or features. Thus, the term "below" can, for example, encompass both an orientation of above and below. An object may be otherwise oriented (*e.g.,* rotated 90 degrees or at other orientations) and the spatially relative descriptors used herein may be interpreted accordingly.

Unless clearly indicated otherwise, all connections and all operative connections may be direct or indirect. Similarly, unless clearly indicated otherwise, all connections and all operative connections may be rigid or non-rigid.

Like numbers refer to like elements throughout. Thus, the same or similar numbers may be described with reference to other drawings even if they are neither mentioned nor described in the corresponding drawing. Also, even elements that are not denoted by reference numbers may be described with reference to other drawings.

Many different forms and embodiments are possible without deviating from the spirit and teachings of this disclosure and so this disclosure should not be construed as limited to the example embodiments set forth herein. Rather, these example embodiments are provided so that this disclosure will be thorough and complete and will convey the scope of the disclosure to those skilled in the art.

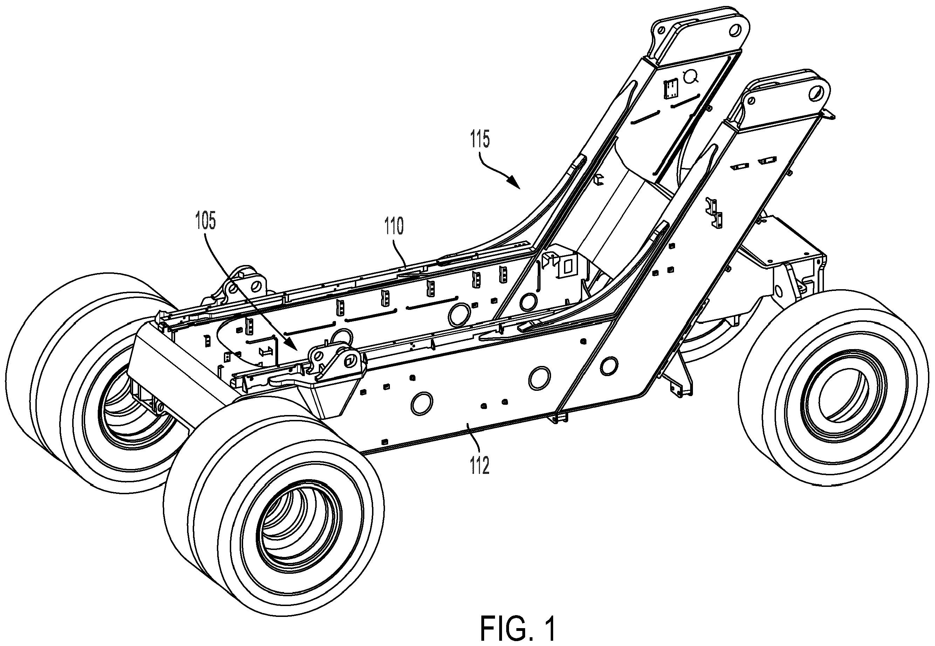

Figure 1 illustrates a frame 115 for a conventional diesel-powered materials-handling vehicle that can be adapted for a fuel-cell vehicle. Referring to Figure 1, the conventional frame 115 for an internal-combustion-engine reach truck includes two longitudinally arranged side frame members 110, 112 spaced apart from each other by a gap 105.

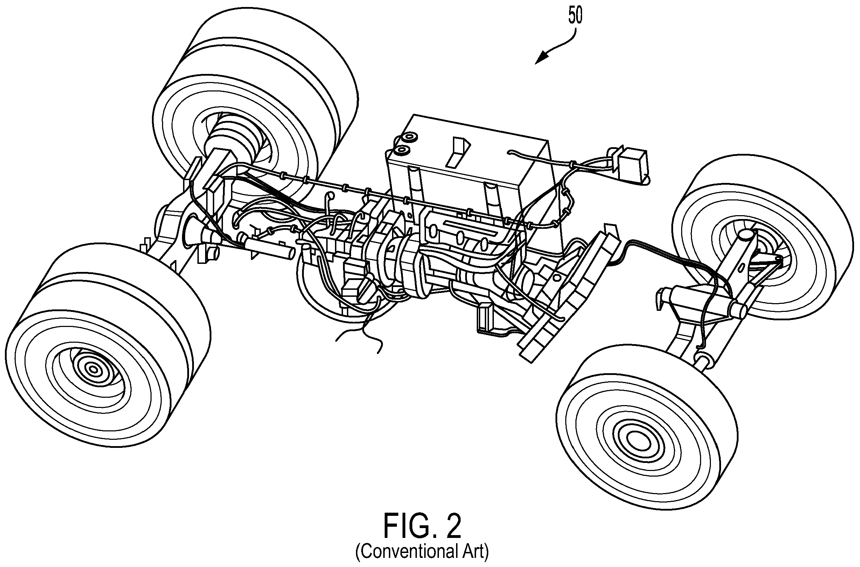

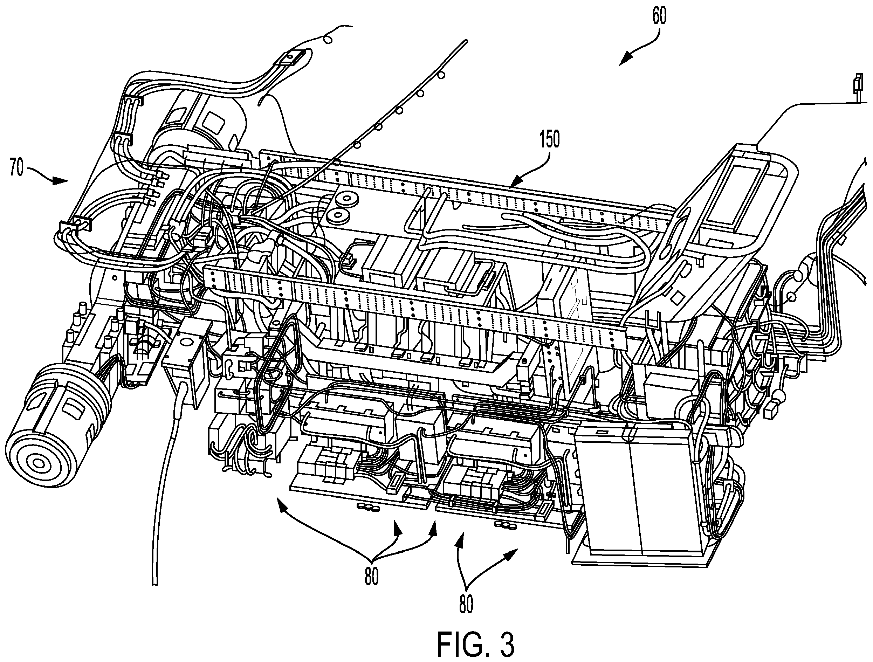

Figure 2 is an isometric view illustrating the internal components of conventional diesel-powered materials-handling vehicle 50 removed from the frame 115 of Figure 1. Figure 3 is a somewhat schematic isometric view illustrating internal components of a fuel-cell-powered materials-handling vehicle 60 and further illustrating a method of routing cables and lines (electrical wiring, hoses, tubes, etc.) using a cable guide 150 according to principles of the present inventive concepts. Comparing Figures 2 and 3, the additional complexities of routing the numerous additional cables and lines in a fuel-cell vehicle 60 are apparent as compared to conventional diesel-powered vehicles 50.

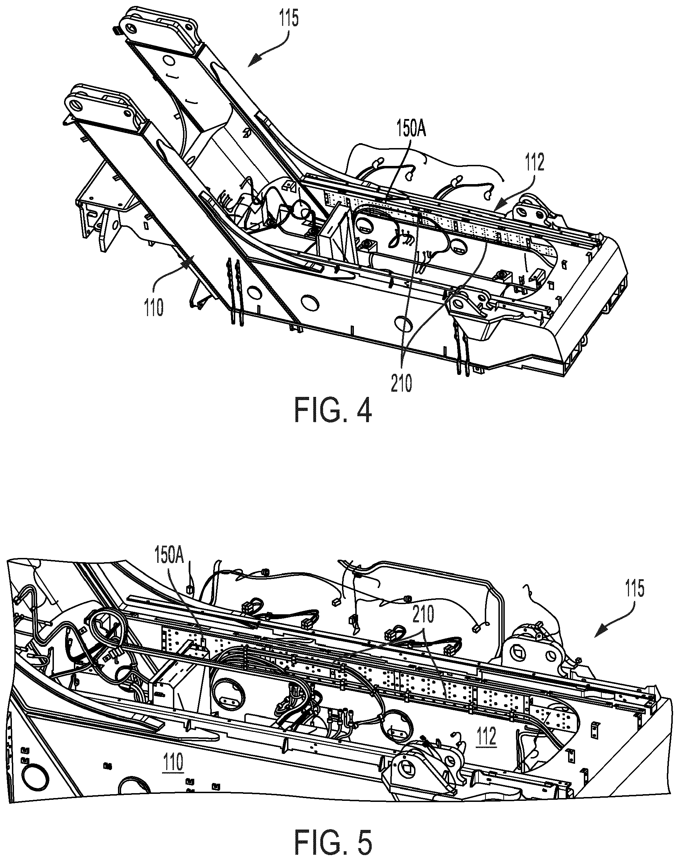

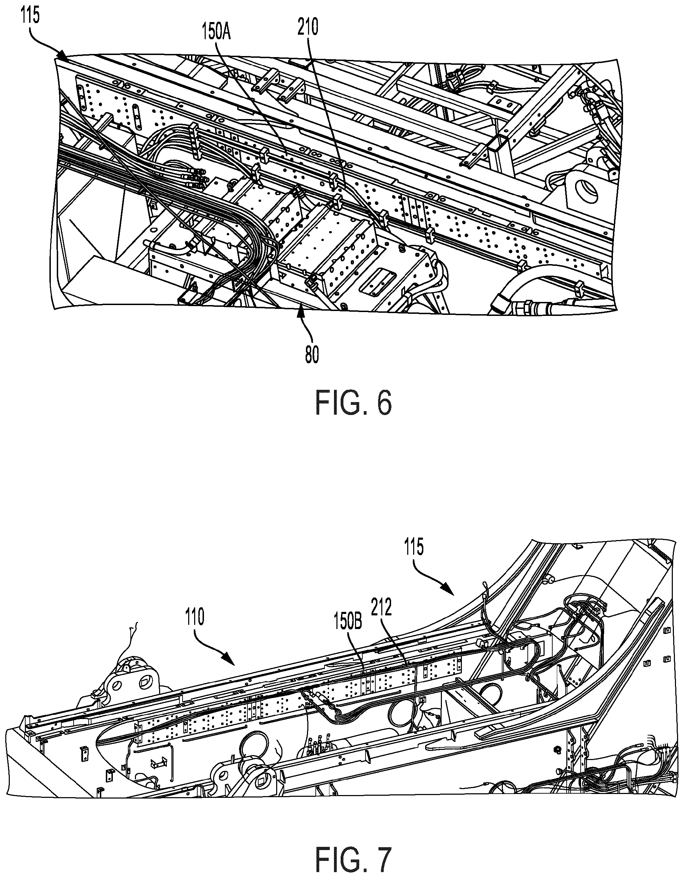

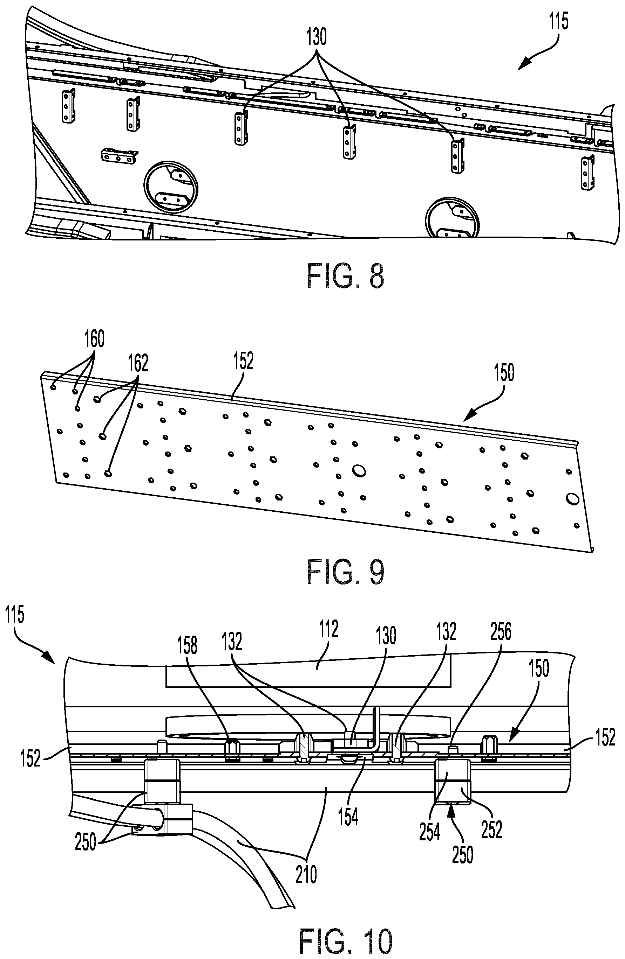

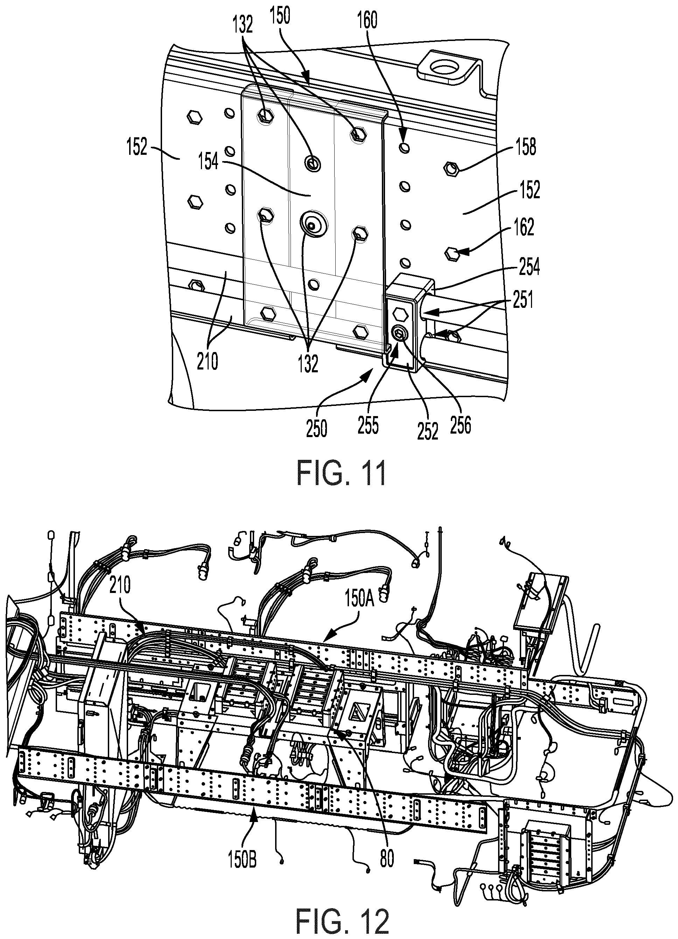

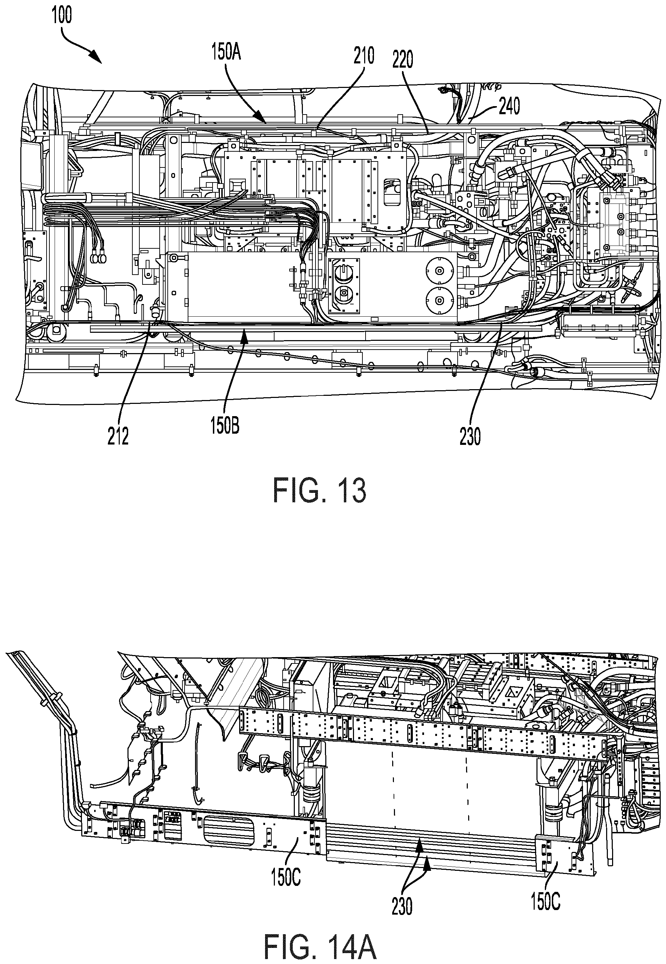

Figure 4 is an isometric illustration of the frame 115 of Figure 1, further showing a cable guide 150 constructed and attached to a left hand (LH) side 112 of the frame 115 according to principles of the present inventive concepts. Figure 5 is a close-up view of the vehicle frame 115 of Figure 4, further illustrating a routing of cables 210 along the cable guide 150 attached to the vehicle frame 115. Figure 6 is a close-up isometric illustration of the cable guide 150 along with high voltage (HV) wiring 210 arranged along the cable guide 150 and high voltage components 80 arranged within the vehicle frame 115 of Figure 1. Figure 7 is an isometric view of a right hand (RH) side 110 of the vehicle frame 115 of Figure 1, further having a cable guide 150 arranged thereon for routing low voltage (LV) 220 and hydraulic cables (not shown) according to still further principles of the present inventive concepts. Figure 8 is a close-up view of the vehicle frame of Figure 1 further having connectors 130 adapted to connect to a cable guide 150 according to still further principles of the present inventive concepts. Figure 9 is an isometric illustration of a cable guide plate 152 for the cable guide 150 according to principles of the present inventive concepts. Figures 10 and 11 are close-up views of connections between cables 210, clamps 250, and a cable guide plate 152 and also between an adapter plate 154, multiple cable guide plates 152, and the frame connectors 130 according to still further principles of the present inventive concepts. Figure 12 is a somewhat schematic isometric view of electronic components 80, wiring 210, and cable guides 150 removed from the vehicle frame 115 of Figure 1, further illustrating the components and connections of a cable guide system according to principles of the present inventive concepts. Figure 13 is a somewhat schematic top view of the internal components of a fuel cell materials-handling vehicle 100 illustrating use of the cable guides 150 to route cables and lines throughout the vehicle 100.

Referring now to Figures 1, and 2-13, a conventional material-handling vehicle's frame 115 can, for instance, accommodate a hydrogen fuel cell, hydrogen cylinders, an electric drive train, EMC filter boxes, DC/DC inverters, cooling systems, rechargeable batteries (*e*.*g*., "Li-ion" batteries), a hydraulic system, and other systems necessary to power and operate the vehicle. The electric drive train 70 of the vehicle can be arranged in a space 105 between longitudinal side frames 110, 112 of a main frame 115. Various cables and lines including, for example, high voltage wiring harnesses 210, 24-volt low voltage wiring harnesses 212, cooling lines 220, hydraulic hoses and cabling 230, H₂ piping 240, etc., must all be routed through the vehicle 100 to connect these components together for proper vehicle operation.

According to principles of the present inventive concepts, a cable guide 150 can be mounted to standardized interfaces 130 formed or arranged along the vehicle frame 115 to provide an easy mechanism for organizing and routing cables and lines 210, 212, 220, 230, 240 within the vehicle 100 between the vehicle's operating components 80. The cable guide 150 can, for instance, be a single contiguous structure connected directly to the connectors 130, or it can be formed of multiple modular plates 152 optionally connected together through one or more adapter plates 154. Screws or other mechanical connectors 156 can connect the cable guide plates 152 to the adapter plate 154. Additional screws or other mechanical connectors 132 can connect the adapter plates 154 to the interfaces 130.

More specifically, in one embodiment, cable guide supports or brackets 130 can be formed along or attached to (*e.g.,* welded to) an inside of each of the vehicle's longitudinal side frames 110, 112 to provide a standardized interface 130 to support a cable guide 150 along an inner portion of each of the side frames 110, 112. The cable guide 150 preferably includes an elongated plate-like structure 152 with a plurality of holes 160 arranged through it that support numerous different fastening options. The holes 160 can, for instance, be configured to receive many different types of cable or line connectors such as cable or line clamps 250, Velcro^{®} connectors, wire ties, zip ties, plastic clips, or other mechanical fasteners. The plurality of holes 160 can be arranged in a predetermined arrangement based on a specific desired routing implementation or, more preferably, have multiple patterns to provide a wide variety of cable/line routing options. Additional holes 162 can also be provided for rivets 158 with internal threads to accommodate still other types of fasteners to support other fastening needs.

Alternatively, rather than holes, other connection mechanisms can be arranged along the cable guide at desired connection points to support different arrangements of cable/line routing. For instance, cable clamps or other mechanical cable/line connectors can be fastened to desired locations along the cable guide using adhesive, screws, clips, Velcro^{®}, or any other mechanical or chemical connection sufficient to hold the clamps in their desired location on the cable guide. Or a hook and loop fastener (*e*.*g*., Velcro^{®}) sheet could be arranged along the internal surface of the cable guide to support a hook and loop fastener connection at any point along the sheet.

For convenience and safety, different cables and lines can be arranged along the different sides of the vehicle frame. For instance, high voltage cables 210 can be arranged along the cable guide 150A on the left hand side of the vehicle frame 115 while the low voltage cables 220 and hydraulic lines 230 can be arranged along the cable guide 150B on the right hand side of the vehicle frame 115. Furthermore, the desired cables and lines can be arranged along and connected to the desired cable guide 150A, 150B before the cable guide 150 is installed in the materials-handling vehicle.

In particular, there are multiple rules, guidelines, and best practices for arranging high voltage cables/harnesses in materials-handling vehicles. Additional and different rules apply for low voltage cables/harnesses and EMC filtering. Additional and different rules apply for hydraulic lines. For DC circuits, for instance, HV positive and negative cables should run as close together as possible. HV AC cables should run close together and parallel, but must also be prevented from moving. By providing a cable guide 150 where the wires, hydraulic lines, or both, can be laid out, arranged, and connected to the guide 150 before being installed in the vehicle 100, these best practices can be more easily met by providing easy access to wire and/or hydraulic line layouts and verifying such layouts before being installed in a vehicle. Alternatively, however, the cables and lines (electrical wiring, hoses, tubes, etc.) can be mounted to the cable guides 150 after the cable guides 150 are attached to the vehicle frame 115.

The wiring clamps 250 can be designed to further satisfy the requirements for high voltage cables and to provide effective and easy connection to the cable guides 150. For instance, the clamps 250 can be configured to hold multiple wires and/or lines at a desired distance apart from each other. The clamps 250 can further be designed to connect either to the cable guide 150, to another clamp 250, or both.

In one embodiment, a wiring clamp 250 has a two-piece body with two matching cable receiving grooves 251 formed in each half 252, 254. The cable receiving grooves 251 can be spaced a desired distance apart from each other to maintain the desired distance between the cables 210. To improve manufacturing efficiency, the two halves 252, 254 can be identical to each other. A through hole 255 can be arranged through a center of each of the halves 252, 254 to receive a screw 256 (or other connector). After the cables 210 are arranged in the cable receiving grooves 251 on one half of the body 254, the other half 252 is placed over the cables 210 and a screw (or other connector) 256 is inserted through the center hole 255 to hold the two halves 252, 254 together and to secure the clamp 250 to the cable guide 150, to another clamp 250, or both, as desired. Of course, other clamp designs are contemplated. For example, a similar clamp can be designed for securing a single wire, cable, hose, or other suitable element or for securing more than two such elements to the cable guide.

The cable guide design can support different wheel bases by offering countless routing options. The cable guide 150 can be formed of multiple modular plates 152 with the number of plates selected based on the truck type (*e.g.,* truck length). The cable guide plates 152 can be connected directly to the supports 130 on the vehicle frame 115 or adapter plates 154 can optionally be provided to connect the guide plates 152 to the vehicle frame 115 and to connect multiple cable guide plates 152 together. Modular plates 152 provide simplicity in manufacturing and cost advantages in terms of reduced parts counts and reduced parts costs due to increased volumes.

However, the cable guide 150 can alternatively be configured of a single plate having a length selected based on the truck length. Multiple cable guide plate lengths can be provided for different truck lengths. The single plate configuration can be connected directly to the supports 130, or other clips or adaptors can be used to connect the cable guide 150 to the frame 115.

In one embodiment, the cable guide 150 is made of a readily available material such as precoated steel with a zinc layer. This material is suitable for laser cutting and also does not require any additional corrosion protection. It can also provide an electrical connection for equipotential ground straps and is suitable for EMC filtering because it allows dissipation of electrical noise through the frame as opposed to through the wiring. The cable guide can be provided with a grounded connection to the frame (*e.g*., by stripping the paint off the connectors or connecting to unpainted connectors) or the cable guide can be designed to provide sufficient grounding. Of course, other materials (including metals and/or plastics) that are easy to form into a plate-like structure having a pattern of holes, and that also preferably provide some degree of corrosion resistance either with or without additional treatment, could be used. If plastics or non-conducting metals are used, additional electrical connectors or dissipators for ground straps and EMC filtering may be required.

A thin plate (*e.g.,* 1-2 mm) provides a good receiver for plugs which can hold gable clamps to the cable guide. The thin plate allows punch tools to create additional holes when required or desired for different positions of (clamp) mounting locations. Some mobile steel press tools (*e.g.,* the POP Avdel 74290 compressed air tool available from KVT-Fastening or the RIV990 hydropneumatic punching tool available from Rivit) can make hexagon holes as well which can be used for rivets with an internal thread. Additional receiving holes and mounting locations could therefore be easily added during the build. Alternatively, existing round holes could be easily changed into hexagon holes to receive hexagon rivets.

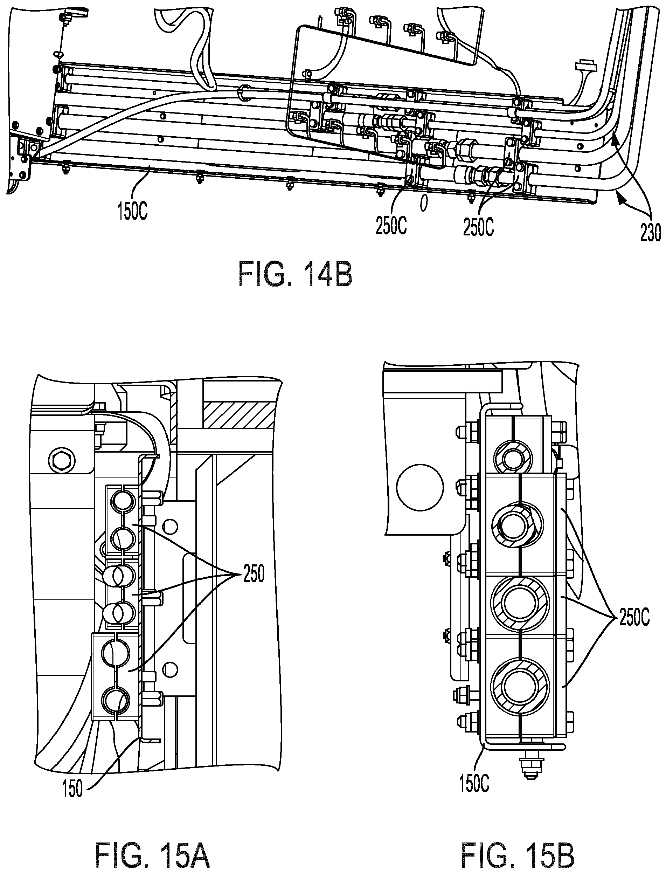

Figure 14A is an isometric view of the electronic components similar to Figure 12, but further illustrating a cable tray 150C for supporting hydraulic tubes (lines) and cables 230, and clamps 250C. Figure 14B is an isometric view of the cable tray 150C of Figure 14A illustrating connections between the hydraulic cables and tubes 230 to the cable tray 150C. Figure 15A is a cutaway side view of the cable guide 150 of Figure 12 illustrating a connection between the cable guide 150 and HV cables 210. And Figure 15B is a cutaway side view of the cable tray 150C of Figure 14A illustrating connections between the cable tray 150C and hydraulic lines 230. Referring additionally to Figures 14A-15B, a cable guide, in this case cable tray 150C can also be provided to secure and route hydraulic lines (tubes) and cables 230 using clamps 250C secured to the cable tray 150C.

As illustrated in these figures, clamps 250C can be provided that act similar to the clamps 250 used to secure HV wiring 210 to the cable guide 150. The clamps 250C, however, secure hydraulic lines 230 to the cable tray 150C. Unlike the clamps 250, the hydraulic clamps 250C may have a single groove to receive a single hydraulic line 230, and may have holes on opposing ends to receive connectors (such as bolts) to secure the clamp 250C to the cable tray 150C on both ends of the clamp 250C.

The cable guide 150 according to principles of the present inventive concepts provides easy configurability for different application demands. Because it provides countless different routing options, it can be used for any materials-handling vehicle (truck) configuration regardless of the combinations of fuel cells, hydrogen storage containers, cooling systems, batteries, etc. Using a reconfigurable cable guide also provides flexibility for future updates and field upgrades by making it simple to upgrade/downgrade to higher/different configurations within a manufacturing facility or by dealers. It adds no appreciable costs to the design, eases assembly, and improves the chances of "first time right" in manufacturing.

This design provides commonality between different frames, reducing the need for different frame weldments and improves the quality control on the assembly line. Moreover, use of a standardized interface permits a single truck frame to be used for multiple configurations of internal components without the need for specialized routing components to be designed into the truck frame itself. This supports both a shorter time to market and a shorter release to production time, and also facilitates cost reductions due to larger parts volumes.

Although particularly useful for high voltage trucks such as reach trucks and container trucks, these principles can be used with respect to any materials-handling vehicle and other industrial vehicles.

### CONCLUSION

Various other improvements are also contemplated and numerous variations to the specific designs identified above are possible without departing from the spirit and scope of the inventive concepts. Having described and illustrated principles of the present inventive concepts in various preferred embodiments thereof, it should be apparent that the invention can be modified in arrangement and detail without departing from such principles. In particular, it should be apparent that the systems and methods described herein could be used for vehicles other than materials-handling vehicles and for other similar devices that require cable routing.

The terms and descriptions used above are set forth by way of illustration and example only and are not meant as limitations. Those skilled in the art will recognize that many variations, enhancements, and modifications of the concepts described herein are possible without departing from the underlying principles of the invention. For example, skilled persons will appreciate that the subject matter of any sentence or paragraph can be combined with subject matter of some or all of the other sentences or paragraphs, except where such combinations are mutually exclusive. The scope of the invention should therefore be determined only by the following claims, claims presented in a continuation patent application, and equivalents to the foregoing claims.

## Claims

1. A cable guide (150, 150A, 150B, 150C) for a materials-handling vehicle (50, 60, 100), the cable guide (150, 150A, 150B, 150C) comprising:
a plate (152) having a plurality of connection points (160, 162) arranged therein in a predetermined pattern, wherein the connection points (160, 162) are configured to receive mechanical connectors (250, 250C) for fastening cables, hoses, tubes, or other lines (210, 212, 220, 230, 240) to the plate (152); and
a connection mechanism (130, 132, 154, 156) for connecting the plate (152) to an interior of a materials-handling vehicle frame (115), wherein a plurality of cables, hoses, tubes, or other lines (210, 212, 220, 230, 240) can be connected to the plate (152) using the mechanical connectors (250, 250C) before the plate (152) is installed in the materials-handling vehicle (50, 60, 100) using the connection mechanism (130, 132, 154, 156).

2. A cable guide (150, 150A, 150B, 150C) according to claim 1, further comprising at least two plates (152).

3. A cable guide (150, 150A, 150B, 150C) according to claim 2, wherein each of the two plates (152) is identical.

4. A cable guide (150, 150A, 150B, 150C) according to claim 2, wherein the two plates (152) are connected together using an adapter plate (154).

5. A cable guide (150, 150A, 150B, 150C) according to claim 4, wherein the adapter plate (154) is configured to be connected to the vehicle frame (115) as well as to each of the two plates (152).

6. A cable guide (150, 150A, 150B, 150C) according to claim 1, 2, 3, 4, or 5, wherein the connection points (160, 162) comprise holes arranged through the plate (152) in the predetermined pattern.

7. A cable guide (150, 150A, 150B, 150C) according to claim 6, wherein the mechanical connector (250, 250C) is a cable clamp (250) configured to hold a plurality of cables (210) at a predetermined distance apart from each other.

8. A cable guide (150, 150A, 150B, 150C) according to claim 7, wherein the cable clamp (250) is configured to be selectively attachable to the cable guide (150), to another cable clamp (250), and to both the cable guide (150) and another cable clamp (250).

9. A cable guide (150, 150A, 150B, 150C) according to claim 1, 2, 3, 4, 5, 6, 7, or 8, wherein the cable guide (150, 150C) comprises mechanical connectors (250, 250C) connected to the plate (152) at selected ones of the connection points (160, 162), but fewer than all of the connection points (160, 162).

10. A cable guide (150, 150A, 150B, 150C) according to claim 1, 2, 3, 4, 5, 6, 7, 8, or 9, wherein the cable guide (150, 150A, 150B, 150C) is formed of an electrically conductive material having corrosion resistant properties.

11. A cable guide (150, 150A, 150B, 150C) according to claim 10, wherein the material is steel precoated with a zinc layer.

12. A method of routing cables and lines (210, 212, 220, 230, 240) in a materials-handling vehicle (50, 60, 100), the method comprising:
providing frame connectors (130) along an internal side of a frame (115) of the materials-handling vehicle (50);
connecting a cable guide (150, 150C) to one or more of the frame connectors (130), said cable guide (150, 150C) having a plate-like structure (152) with a plurality of connection points (160, 162) arranged in a pattern along the plate-like structure (152); and
connecting a plurality of cables and lines (210, 212, 220, 230, 240) to the cable guide (150, 150C) using mechanical connectors (250, 250C) connected to the plate-like structure (152) at selected ones of the connection points (160, 162) either before or after connecting the cable guide (150, 150C) to the frame connectors (130).

13. A method according to claim 12, wherein the plurality of connection points (160, 162) comprises a plurality of holes formed through the plate-like structure (152).

14. A method according to claim 12 or 13, wherein the plate-like structure (152) comprises a plurality of substantially identical plates (152).

15. A method according to claim 12, 13, or 14, wherein cable guide (150, 150C) is formed of an electrically conductive material that further provides EMC filtering characteristics.
